# EUROPEAN PATENT SPECIFICATION

(11) **EP 2 358 570 B1**
(45) Date of publication and mention of the grant of the patent: **30.07.2014**
(21) Application number: 09801524.1
(22) Date of filing: 15.12.2009
(51) Int. Cl.: B60R 25/00

(54) **SOUND INSULATION**
SCHALLISOLIERUNG
ISOLATION PHONIQUE

(30) Priority: 17.12.2008 GB 0823055
(43) Date of publication of application: 24.08.2011
(73) Proprietor: Automotive Insulations Limited, Warwickshire CV22 7DH (GB)
(72) Inventor: GRIFFIN, James, Anthony, Warwickshire CV22 7DH (GB)
(74) Representative: Chettle, Adrian John
(86) International application number: PCT/GB2009/002878
(87) International publication number: WO 2010/070270

(56) References cited:
- EP-A2- 1 134 479
- WO-A1-2004/038116
- WO-A2-2008/061237
- JP-A- 62 289 446
- US-A1- 2005 075 029
- US-A1- 2005 217 932
- US-A1- 2006 046 598

## Description

This invention relates to sheet-like sound insulation, particularly but not exclusively for vehicles.

Most vehicles incorporate sound insulation so as to minimize the transmission of noise into the passenger compartment. Such noise typically emanates from the engine and driveline, and from the road surface. A range of materials, including felts, foams and fibres, has been developed to suit the intended location, the local environment, and the degree of noise suppression which is required.

A particular problem arises in doors of vehicles, which typically comprise a full outer skin spaced from a partial inner skin. The space between the inner and outer skins may be used to house a door glass in the dropped position.

On the inner side a door casing is fixed to the inner skin, and constitutes a trim panel defining part of the passenger compartment. Typically the inner skin is substantially flat, whereas the door casing is moulded in deep relief for styling purposes. The casing also defines physical features such as an armrest, a speaker housing and mounting surfaces for door latch mechanisms and the like. Door casings usually consist of a stiff plastics moulding to the outside of which internal trim surfaces are attached. On the inner side, adjacent the inner skin of the door, various mechanical and electrical fittings may be provided.

The space between the door skins is considered to be 'wet' and susceptible of rain water ingress; suitable drain holes are provided. To protect the door casing from damage by moisture, it is conventional to apply a water shedding barrier to the exterior surface of the inner skin, typically sheet polyethylene secured by a peripheral band of adhesive. Such polyethylene sheet can deform to accommodate shallow stiffening ribs of the inner door skin.

It may be required to apply sound insulation to the door casing. Sheet insulation is desirable, but requires moulding and trimming to the profile of the casing, and a fitting step. The physical extent of such insulation may be compromised by the attachment of components to the inside surface of the door casing, and by links or cables of a door release mechanism.

In cases where insulation is applied to the door casing, the usual method is to affix patches of relatively dense felt or foam by adhesive in places where space is available. Such places may not be best positioned for noise attenuation, but are dictated by other door components and by the styling of the casing. Felt and foam also have the disadvantage of absorbing moisture in the event that the water shedding barrier is breached - and it is of course inevitable that some openings are provided in said barrier to permit connection of door mounted components such as a door latch mechanism, to those components mounted on the door casing, such as an internal latch release lever.

Additional problems with patch insulation are that a jig is required to ensure precise positioning, for example to avoid fouling of a door mounted component, and that such insulation has a tendency to be damaged or to fall off before fitting to the door, and if the door casing is removed for any reason.

What is required is a more effective means of providing noise insulation for the door of a motor vehicle.

US-A-2006/0046598 discloses an insulation blanket from which may be derived the pre-characterizing features of claim 1 appended hereto.

WO-A-2004/038116 discloses a multi-layer insulation laminate from which may also be derived the pre-characterizing features of claim 1.

According to the invention there is provided sheet noise insulation comprising an impervious moisture barrier and a co-extensive layer of lofted plastic fibre thereon, said layer having a very high air volume and consequently a high compressibility at low applied force, and said sheet noise insulation providing a web for blanking of individual flat insulation panels, characterized in that said barrier is one of impermeable polyethylene and polypropylene sheet having a thickness in the range 0.05 - 0.20mm, and said layer comprises a mixture of polypropylene and polyester fibres.

Such sheet insulation can be manufactured with ease, and cut to template for direct application to the substantially flat inner skin of a vehicle door. The moisture barrier typically covers the entire covered surface of the inner skin, and accordingly the lofted fibre layer is provided to the greatest possible extent.

By 'lofted' is meant a fibre material having a very high air volume, and consequently a high compressibility at low applied force.

The moisture barrier comprises polyethylene or polypropylene sheet having a thickness in the range of 0.05mm- 0.20mm, most preferably about 0.08mm.

The lofted plastic fibre typically has a thickness in the range 5-25mm. The density of the plastic fibre typically lies in the range 200g/m² - 450 g/m².

The lofted plastic fibre is a substantially bi-component material consisting of polyester staple fibres and polypropylene fibres. Such fibres are preferably homogenously mixed, and preferably about twice as many polypropylene fibres are provided by weight as compared with polyester fibres. In one example 32% by weight polyester staple fibres are mixed with 68% by weight polypropylene fibres.

The lofted plastic fibre may further contain up to 10% by weight bi-component fibre consisting of polyester and polypropylene.

The lofted plastic fibre may further contain up to 25% by weight filler material consisting of felt and/or EDPM synthetic rubber in the form of shredded or particulate material.

Preferably the lofted plastic fibre is non-flammable, for example to FMVSS 302 or DIN 75 200. Such non-flammability may be provided, if necessary, by suitable additive or coating.

The lofted plastic fibre is preferably a non-woven sheet material.

Typically the moisture barrier is conventional polyethylene sheet, and the lofted plastics fibre is a layered microfibre, such as THINSULATE (TM). Such microfibre further improves resistance to moisture transmission to the door casing. The fibre layer may provide a brush-like seal for apertures in the moisture barrier, and thus prevent or at least obstruct moisture transfer.

A particular advantage of lofted fibre is that the air volume is high, and accordingly the fibre layer will squash down where hard points of the door casing closely approach the inner door skin, without exerting any substantial resistance; deformation of the door casing is thus obviated. Consequently it is envisaged that sheet noise insulation according to the invention can be a direct replacement where only a moisture barrier is currently provided.

Special measures to accommodate the door casing, and/or components mounted thereon, are not required, and the lofted fibre naturally expands into all available spaces between the door casing and the door skin.

Affixing of patch insulation to door casings, and the problems associated therewith are obviated, so that expense is saved whilst providing more complete noise insulation.

Although described in relation to doors of motor vehicles, the sheet noise insulation according to the invention has application elsewhere in vehicles, and may also be used in structures and machines where a vapour or moisture barrier is required.

Sheet insulation according to the invention may be compressed and sealed around the periphery thereof, for example by heat, to better improve structural integrity and appearance, and may further be heat sealed around apertures and openings therein. The lofted plastic fibre and impervious layer may be adhered.

A scrim or other thin protective layer may overlie the lofted plastic fibre so as to better retain fibres and improve the appearance and handling thereof.

The invention also provides a method of manufacturing sheet noise insulation comprising the steps of: providing a first impermeable sheet material comprising an impervious barrier of polyethylene or polypropylene having a thickness in the range 0.05 - 0.20mm, said sheet material having an adhesive on one side surface thereof; providing a second sheet material comprising a lofted plastic fibre of polypropylene and polyester fibres; and placing the second material in contact with said adhesive to provide a composite dual layer sheet material in the form of a web for blanking of individual flat insulation panels.

Preferably the method provides for said first and second materials to be unrolled from respective rolls.

The method may further include providing a protective backing material to said one side surface to protect said adhesive, and stripping said backing immediately prior to contact with said second sheet material, for example by rolling said backing into a roll.

In the method the composite sheet material may be rolled into a roll for transport and/ or storage.

In use the composite material is cut into a desired shape for example by a pastry cutter type operation. The cutting blade may include a heatable compression face on the inside thereof so as to compress the edge of a cut-out shape during the blanking step. By controlling the heat of said compression face, some fibres of the lofted material soften or melt so as to cause the compressed edge to be retained, so as to improve the appearance and durability thereof.

The invention also provides a door of a motor vehicle, said door having an inner skin to which is applied sheet noise insulation according to the invention.

Other features of the invention will be apparent from the following description of a preferred embodiment shown by way of example only in the accompanying drawings, in which:-
Fig. 1 illustrates a typical vehicle door carcass, from the inside.
Fig. 2 illustrates a typical door casing, from the inside.
Fig. 3 illustrates sheet insulation according to the present invention.
Fig. 4 is a transverse section through a typical sheet insulation according to the invention.
Fig. 5 corresponds to Fig. 4 and shows a sealed edge.

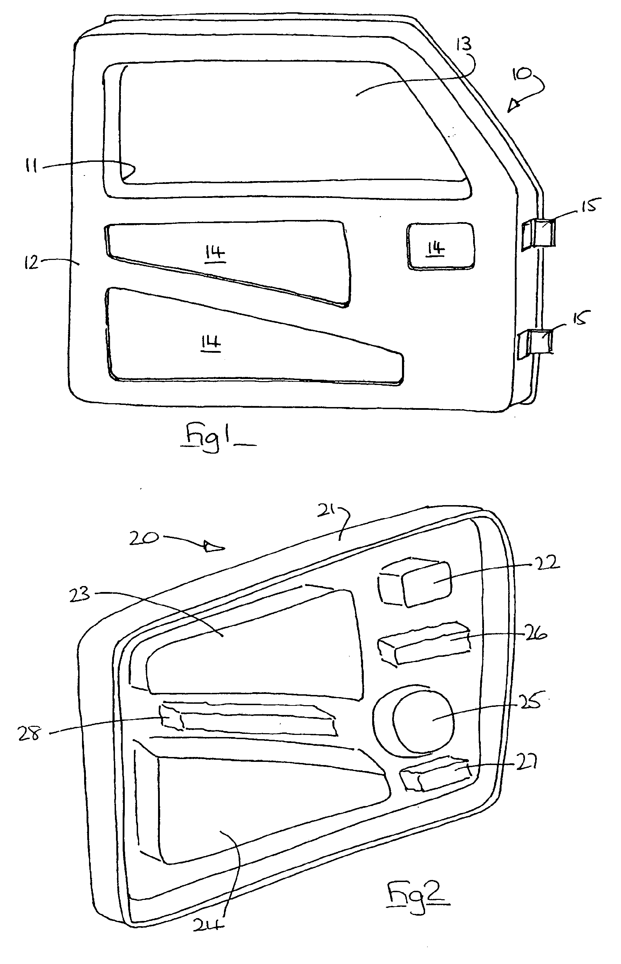

With reference to the accompanying drawings, Fig. 1 illustrates an undressed vehicle door (10) from the inside, and consisting of an outer skin (11) spaced from an inner skin (12) to define a narrow box-like structure with a window opening (13). The outer skin (11) is continuous below the waistline, whereas the inner skin (12) has apertures (14) to allow fitting of components and to save weight. Schematic hinges (15) are illustrated. The inner skin (12) may have shallow stiffening ribs (not shown).

A conventional door casing (20) for attachment to the inner skin (12) consists of a rigid plastic tray-like deep moulding having an upstanding peripheral edge (21), and a plurality of inwardly moulded recesses (22-25), for example for a door release, elbow space, a door pocket and a speaker. The internal depth of the casing (20) may be in the range 60-100mm.

These recesses (22-25) very closely approach the inner skin so as to maximize internal volume thereof, and accordingly there are few areas where noise insulation can be applied. Typical thick foam blocks (26-28) are illustrated, and attached by contact adhesive. These blocks provide some attenuation of noise passing to the interior of the vehicle, but can be placed only where space is available. Clearly a direct noise transmission path exists from the door to the recesses (22-25).

The invention consists of sheet insulation (30) comprising an impermeable layer (31), such as polyethylene or polypropylene sheet, having a thickness of about 0.08mm, and a lofted plastic fibre layer (32) having a thickness of 5mm or more. A thin scrim overlayer may be provided to ensure that the fibre layer is protected during handling thereof.

The lofted fibre layer comprises a fine fibre or microfibre material, such as Thinsulate (TM), and may be of any desired thickness, up to about 30mm. Lofted fibre layers have high resistance to the passage of noise, yet can squash down to 1-2mm if required under a low applied force.

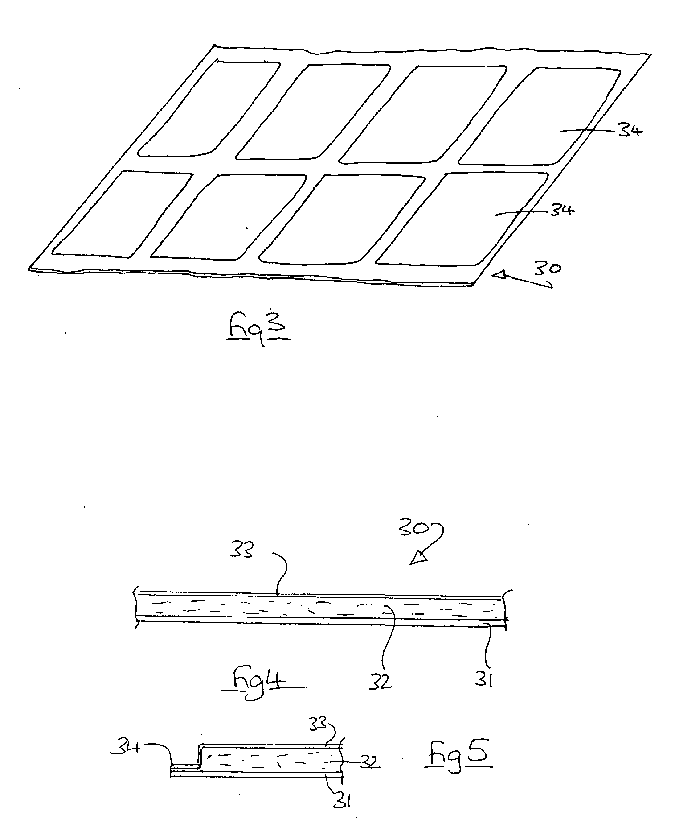

Thus, sheet insulation according to the invention can be formed as a web (33), and blanked to form individual flat insulation panels (34), as illustrated in Fig. 3. Apertures slots and the like can be formed during the blanking step.

Such panels (34) are directly applied to the inner skin of a door prior to attachment of the door casing. In some places the fibre layer (32) may squash virtually flat due to close proximity of the door casing and inner door skin, but fitting of the door casing is not impeded. The invention provides for a lofted noise insulation layer over substantially the entire available area of the door.

A secondary advantage is that where the lifted layer is squashed, it acts to prevent drumming or squeaking caused by relative movement between the door casing and the door.

The lofted fibre layer is adhered to the impervious layer in any suitable manner, e.g. by heat bonding or by adhesive. An adhesive layer may be provided over the entire surface of the impervious layer, and protected by a cover sheet which is removed just prior to application of the fibre layer.

Fig. 5 shows an edge detail, where the layers are squashed down to provide a neat robust rim (34). Heat or adhesive may be used to stiffen and maintain the squashed edge, with or without the scrim layer; for example some fibres may soften or melt under heat, and retain the compressed edge upon cooling.

Sheet noise insulation according to the invention is effective and inexpensive. Special moulding techniques to accommodate the relatively deep recesses of door casings are not required, nor is modification required to accommodate places where the casing and door touch in use. Better sealing is provided in the region of components which must pass through the insulation.

## Claims

1. Sheet noise insulation (30) comprising an impervious moisture barrier (31) and a co-extensive layer of lofted plastic fibre (32) thereon, said layer having a very high air volume and consequently a high compressibility at low applied force, and said sheet noise insulation providing a web (33) for blanking of individual flat insulation panels (34), **characterized in that** said barrier (31) is one of impermeable polyethylene and polypropylene sheet having a thickness in the range 0.05 - 0.20mm, and said layer (32) comprises a mixture of polypropylene and polyester fibres.

2. Insulation according to claim 1, wherein said barrier (31) and layer (32) are adhered.

3. Insulation according to claim 2, and further including an adhesive on said barrier.

4. Insulation according to any preceding claim, wherein the perimeter thereof comprises a heat-sealed seam (35).

5. Insulation according to claim 4, wherein said seam (35) is continuous.

6. Insulation according to any preceding claim, and further including a scrim covering said layer of fibres.

7. Insulation according to any preceding claim, wherein said polyester fibres and polypropylene fibres are in proportion 1:2.

8. Insulation according to any preceding claim, wherein said lofted plastic fibre (32) contains up to 25% by weight EDPM rubber and/or felt in the form of particles.

9. A method of manufacturing sheet noise insulation according to any preceding claim comprising the steps of:
providing a first impermeable sheet material (31) comprising an impervious barrier of polyethylene or polypropylene having a thickness in the range 0.05 - 0.20mm, said sheet material having an adhesive on one side surface thereof;
providing a second sheet material (32) comprising a lofted plastic fibre of polypropylene and polyester fibres; and
placing the second material in contact with said adhesive to provide a composite dual layer sheet material in the form of a web for blanking of individual flat insulation panels.

10. The method of claim 9, further include providing a protective backing material to said one side surface to protect said adhesive, and stripping said backing immediately prior to contact with said second sheet material.

11. The method of claim 9 or claim 10, including the steps of blanking door insulation from said composite sheet material and compressing the edge of said blank with heat to cause said edge to be retained in a compressed state.

12. A door of a vehicle having sheet noise insulation according to any of claims 1-8 applied thereto.

## Patentansprüche

1. Schalldämmplatte (30), umfassend eine undurchlässige Feuchtigkeitssperre (31) und darauf eine Schicht gleicher Ausdehnung aus aufgebauschter Kunststofffaser (32), wobei diese Schicht ein sehr großes Luftvolumen aufweist und daher eine hohe Kompressibilität bei geringer angelegter Kraft hat, und wobei diese Schalldämmplatte eine Bahn (33) zum Stanzen einzelner flacher Dämmfelder (34) vorsieht, **dadurch gekennzeichnet, dass** die Sperre (31) aus undurchlässiger Polyethylen- und Polypropylenfolie mit einer Dicke im Bereich von 0.05 - 0.20 mm ist, und die Schicht (32) ein Gemisch aus Polypropylen- und Polyesterfasern umfasst.

2. Dämmplatte nach Anspruch 1, wobei Sperre (31) und Schicht (32) aneinander haften.

3. Dämmplatte nach Anspruch 2, ferner einen Klebstoff auf der Sperre umfassend.

4. Dämmplatte nach einem der vorangehenden Ansprüche, wobei deren Umfang einen heiß gesiegelten Saum (35) umfasst.

5. Dämmplatte nach Anspruch 4, wobei der Saum (35) durchgehend ist.

6. Dämmplatte nach einem der vorangehenden Ansprüche, ferner eine die Faserschicht abdeckende Gaze umfassend.

7. Dämmplatte nach einem der vorangehenden Ansprüche, wobei die Polyesterfasern und die Polypropylenfasern ein Verhältnis von 1:2 haben.

8. Dämmplatte nach einem der vorangehenden Ansprüche, wobei die aufgebauschte Kunststofffaser (32) bis zu 25 Gewichtsprozent EPDM-Gummi und/oder -Filz in Form von Teilchen enthält.

9. Verfahren zur Herstellung einer Schalldämmplatte nach einem der vorangehenden Ansprüche, umfassend die Schritte
Bereitstellen eines ersten undurchlässigen bahnförmigen Materials (31) mit einer undurchlässigen Sperre aus Polyethylen oder Polypropylen mit einer Dicke im Bereich von 0,05-0,20 mm, wobei das bahnförmige Material auf der Oberfläche einer Seite einen Klebstoff aufweist,
Bereitstellen eines zweiten bahnförmigen Materials (32) mit einer aufgebauschten Kunststofffaser aus Polypropylen- und Polyesterfasern und
Anbringen des zweiten Materials in Kontakt mit dem Klebstoff, um ein Doppelschicht-Verbundmaterial in Form einer Bahn zum Stanzen einzelner flacher Dämmfelder zu erhalten.

10. Verfahren nach Anspruch 9, ferner umfassend das Anbringen eines schützenden Trägermaterials auf der Oberfläche der einen Seite zum Schutz des Klebstoffs und das Abziehen des Trägermaterials unmittelbar vor dem Kontakt mit dem zweiten bahnförmigen Material.

11. Verfahren nach Anspruch 9 oder Anspruchs 10, umfassend die Schritte Ausstanzen der Türdämmung aus dem bahnförmigen Verbundmaterial und Heißpressen des Randes des ausgestanzten Teils, um diesen Rand im komprimierten Zustand zu halten.

12. Fahrzeugtür mit einer daran angebrachten Schalldämmplatte nach einem der Ansprüche 1-8.

## Revendications

1. Elément d'isolation phonique (30) sous forme de feuille comprenant une barrière anti-humidité étanche (31) et une couche co-étendue de fibres plastiques de rembourrage (32) située sur celle-ci, cette couche ayant un volume d'air très important et par suite une grande compressibilité pour une faible force appliquée, et cet élément d'isolation phonique sous forme de feuille comportant un tissu (33) pour permettre de masquer des panneaux d'isolation plans individuels (34),
**caractérisée en ce que**
la barrière (31) est une feuille en polyéthylène ou en polypropylène imperméable ayant une épaisseur située dans la plage de 0,05 - 0,20 mm et la couche (32) renferme un mélange de fibres de polypropylène et de fibres de polyester.

2. Elément d'isolation conforme à la revendication 1, dans lequel la barrière (31) et la couche (32) sont collées l'une à l'autre.

3. Elément d'isolation conforme à la revendication 2, comprenant en outre un adhésif situé sur la barrière.

4. Elément d'isolation conforme à l'une quelconque des revendications précédentes dont le périmètre comprend une jointure scellée thermiquement (35).

5. Elément d'isolation conforme à la revendication 4, dans lequel la jonction (35) est continue.

6. Elément d'isolation conforme à l'une quelconque des revendications précédentes, comprenant en outre un non tissé recouvrant la couche de fibres.

7. Elément d'isolation conforme à l'une quelconque des revendications précédentes, dans lequel les fibres de polyester et les fibres de polypropylène sont présentes en proportion de 1:2.

8. Elément d'isolation conforme à l'une quelconque des revendications précédentes, dans lequel les fibres plastiques de rembourrage (32) renferment jusqu'à 25 % en poids d'EPDM caoutchouc et/ou de feutre sous la forme de particules.

9. Procédé d'obtention d'un élément d'isolation phonique sous forme de feuille conforme à l'une quelconque des revendications précédentes, comprenant les étapes consistant à :
se procurer un premier matériau sous forme de feuille imperméable (31) comprenant une barrière étanche en polyéthylène ou en polypropylène ayant une épaisseur située dans la plage de 0,05 - 0,20 mm, ce matériau sous forme de feuille ayant un adhésif sur l'une de ses faces,
se procurer un second matériau sous forme de feuille (32) comprenant des fibres plastiques de rembourrage en polypropylène et polyester, et
mettre le second matériau en contact avec l'adhésif pour obtenir un matériau sous forme de feuille composite à double couche sous la forme d'un tissu de masquage de panneaux isolants plans individuels.

10. Procédé conforme à la revendication 9, comprenant en outre une étape consistant à mettre en place un matériau dorsal protecteur sur la face pour protéger l'adhésif et peler ce matériau dorsal immédiatement avant le mise en contact avec le second matériau sous forme de feuille.

11. Procédé conforme à la revendication 9 ou 10, comprenant les étapes consistant à masquer des isolations de porte avec le matériau composite sous forme de feuille et comprimer thermiquement les bords de ce masque par la chaleur de sorte que ces bords soient maintenus à l'état comprimé.

12. Porte de véhicule comprenant un élément d'isolation phonique sous forme de feuille conforme à l'une quelconque des revendications 1 à 8 appliqué sur celle-ci.
